(19) Europäisches Patentamt
European Patent Office
Office européen des brevets

(11) **EP 3 064 960 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(51) Int Cl.:
***G01S 13/38*** *(2006.01)*   ***G01S 7/02*** *(2006.01)*

(21) Anmeldenummer: **16155647.7**

(22) Anmeldetag: **15.02.2016**

(54) **VERFAHREN ZUM BETRIEB EINES DAUERSTRICHRADARDETEKTORS UND DAUERSTRICHRADARDETEKTOR**

METHOD FOR OPERATING A PERMANENT LINE RADAR DETECTOR AND PERMANENT LINE RADAR DETECTOR

PROCEDE DE FONCTIONNEMENT D'UN DETECTEUR RADAR A ONDES ENTRETENUES ET DETECTEUR RADAR A ONDES ENTRETENUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.03.2015 DE 102015102929**

(43) Veröffentlichungstag der Anmeldung:
**07.09.2016 Patentblatt 2016/36**

(73) Patentinhaber: **SICK AG**
**79183 Waldkirch/Breisgau (DE)**

(72) Erfinder:
• **Wunsch, Stefan**
**76131 Karlsruhe (DE)**
• **Fink, Johannes**
**76131 Karlsruhe (DE)**
• **Prinz, Oliver**
**79104 Freiburg (DE)**

(74) Vertreter: **Manitz Finsterwald Patentanwälte PartmbB**
**Martin-Greif-Strasse 1**
**80336 München (DE)**

(56) Entgegenhaltungen:
EP-A1- 2 031 417     EP-A1- 2 680 032
US-A- 4 537 502      US-A1- 2012 133 544
US-A1- 2012 309 324  US-B1- 6 703 967
US-B1- 7 773 029

EP 3 064 960 B1

**Beschreibung**

Die Erfindung betrifft ein Verfahren zur Bestimmung von Informationen über Abstände und/oder Relativgeschwindigkeiten von Objekten mit einem Dauerstrichradardetektor.

Ein Dauerstrichradardetektor, nachfolgend auch kurz als "Dauerstrichradar" bezeichnet, ist ein Radarsystem mit einem Sender und einem Empfänger, bei dem der Sender eine hochfrequente elektromagnetische Welle in Richtung eines Überwachungsbereichs aussendet. Trifft die elektromagnetische Welle auf ein Objekt, so wird ein geringer Teil der Sendeleistung als Echosignal zurück zum Dauerstrichradardetektor reflektiert und dort vom Empfänger registriert. Dieses Empfangssignal dient als Nachweis dafür, dass sich in Ausbreitungsrichtung der Welle ein Objekt befindet. Aus den Eigenschaften des Empfangssignals, beispielsweise dessen Amplitude, Phasenlage und/oder Frequenzspektrum, kann auf Eigenschaften des Objekts, insbesondere dessen Geschwindigkeit und/oder Relativposition, geschlossen werden.

Ein Dauerstrichradar zeichnet sich dadurch aus, dass der Sender zumindest während der Dauer des Messvorgangs ununterbrochen sendet. Die Geschwindigkeitsmessung bei einem Dauerstrichradar basiert auf der Ausnutzung des Dopplereffekts. Die verschiedenen Funktionsprinzipien von Dauerstrichradaren unterscheiden sich vor allem darin, ob bzw. wie die gesendete Frequenz moduliert wird. Ein unmoduliertes Dauerstrichradar wird auch CW-Radar (von englisch *continuous wave radar*) genannt. Während mit einem einfachen CW-Radar, welches nur eine einzige Sendefrequenz aufweist, keine Entfernungen bestimmt werden können, kann mit gewissen Einschränkungen eine Entfernungsmessung dadurch ermöglicht werden, dass das CW-Radar mit zwei geringfügig unterschiedlichen, parallel ausgesendeten Sendefrequenzen betrieben wird. Ein derartiges Dauerstrichradar wird auch als Dual-CW-Radar bezeichnet.

Eine Abstandsbestimmung kann auch mit einem frequenzmodulierten Dauerstrichradar, auch FMCW-Radar (von englisch *frequency modulated continuous wave radar*) genannt, durchgeführt werden. Bei derartigen FMCW-Radaren wird die Sendefrequenz periodisch geändert.

Das ausgesendete Signal wird bei der Reflexion an einem Objekt aufgrund des Dopplereffekts um die Dopplerfrequenz $f_D$ verschoben und kommt nach einer entfernungsabhängigen Laufzeit am Empfänger des Dauerstrichradardetektors an. Die Laufzeit führt bei FMCW-Radarsystemen zu einer zusätzlichen Frequenzverschiebung des Empfangssignals gegenüber der aktuellen Sendefrequenz um eine entfernungsabhängige Frequenz $f_R$. Die Summe aus den beiden Frequenzanteilen ergibt die sogenannte Beatfrequenz $f_B = f_D + f_R$. Die Beatfrequenz enthält somit Informationen über die Relativgeschwindigkeit und/oder den Abstand eines Objekts in Bezug auf den Dauerstrichradardetektor. Durch eine geeignete Signalverarbeitung, die u.a. eine Abwärtsmischung des Empfangssignals umfassen kann, kann aus dem Spektrum des Empfangssignals die Beatfrequenz gewonnen werden. Durch Berücksichtigung weiterer Informationen, z.B. Phaseninformationen, können die Relativgeschwindigkeit und die Relativposition des detektierten Objekts bestimmt werden.

Bei der Auswertung des Empfangssignals wird bei bekannten Verfahren in der Regel nur dessen Amplitude bzw. eine davon abgeleitete Größe, beispielsweise die Leistung oder die Energie, berücksichtigt.

DE 103 49 919 A1 beschreibt ein Verfahren zur Bestimmung von Informationen über Abstände und Relativgeschwindigkeiten von Objekten mithilfe eines Radardetektors, bei dem ein aus mehreren Signalabschnittsfolgen bestehendes Sendesignal verwendet wird. Das Sendesignal wird ausgesendet und an einem Objekt reflektiert und als Empfangssignal empfangen. Das Empfangssignal wird mit dem Sendesignal komplex gemischt, wodurch ein komplexes Spektrum erzeugt wird. Bei der Bestimmung des Abstandes und der Relativgeschwindigkeit wird auch eine Phaseninformation des Empfangssignales berücksichtigt.

US 2012/0133544 A1 und US 2012/0309324 A1 befassen sich damit, den Laufweg eines Signals in einem Medium zu erfassen, welches zwei unterschiedliche Frequenzkomponenten aufweist, wobei u.a. die Phasenlage der Empfangssignalkomponenten untersucht wird.

EP 2 031 417 A1 betrifft einen Mikrowellen-Näherungssensor, bei dem der Abstand von einem Zielobjekt durch interferometrische Auswertung der empfangenen und der emittierten Mikrowelllenstrahlung bestimmbar ist.

US 7 773 029 B1 befasst sich mit der Filterung von Bodenechos bei einem Wetterradarsystem.

Ein leistungsfähiger Dauerstrichradardetektor zeichnet sich durch eine möglichst hohe Detektionsrate und eine möglichst geringe Falschalarmrate aus.

Es ist die Aufgabe der vorliegenden Erfindung, ein Verfahren zur Bestimmung von Informationen über Abstände und/oder Relativgeschwindigkeiten von Objekten mit einem Dauerstrichradar sowie einen Dauerstrichradardetektor anzugeben, welche eine möglichst hohe Leistungsfähigkeit aufweisen.

Die Lösung der Aufgabe erfolgt durch ein Verfahren mit den Merkmalen von Anspruch 1 sowie durch ein Dauerstrichradardetektor mit den Merkmalen des Anspruchs 13. Erfindungsgemäß ist ein Verfahren zur Bestimmung von Informationen über Abstände und/oder Relativgeschwindigkeiten von Objekten mit einem Dauerstrichradardetektor vorgesehen, bei dem

-   ein ursprüngliches Sendesignal vervielfacht wird, um aus dem ursprünglichen Sendesignal mehrere Teilsendesignale zu erzeugen, welche sich bezüglich eines vorgegebenen Kriteriums voneinander unterscheiden,

- das vervielfachte, die Teilsendesignale umfassende Sendesignal ausgesendet wird,
- ein von einem Objekt reflektiertes Sendesignal als Empfangssignal empfangen wird, wobei das Empfangssignal mehrere Teilempfangssignale umfasst, welche jeweiligen Teilsendesignalen zugeordnet sind,
- jedes Teilsendesignal komplex mit dem Empfangssignal gemischt wird, so dass für jedes Teilsendesignal ein jeweiliges komplexes Teilspektrum mit einem Amplitudenspektrum und einem Phasenspektrum erzeugt wird,
- ein Vergleich der Phasenspektren für jeweilige mehrere unterschiedliche Frequenzwerte durchgeführt wird, und
- ein Detektionssignal erzeugt wird, wobei das Erzeugen des Detektionssignals umfasst, dass ein Phasendetektionssignal erzeugt wird, wenn der Vergleich der Phasenspektren ergibt, dass ein vorgegebenes Phasendetektionskriterium für die Detektion eines Objekts erfüllt ist, wobei das vorgegebene Phasendetektionskriterium bei einer bestimmten Frequenz das Vorliegen eines Minimums der statistischen Merkmale bei dieser Frequenz bedeutet.

Unter dem Begriff "Empfangssignal" wird in diesem Zusammenhang sowohl das direkte Empfangssignal als auch ein von dem direkten Empfangssignal abgeleitetes Empfangssignal verstanden. Ein derartiges abgeleitetes Empfangssignal kann beispielsweise ein abwärts gemischtes Empfangssignal sein. Das komplexe Mischen der Teilsendesignale mit dem Empfangssignal umfasst demnach ein komplexes Mischen der Teilsendesignale mit dem direkten Empfangssignal oder mit dem abgeleiteten Empfangssignal, bevorzugt mit dem abwärts gemischten Empfangssignal. Ein komplexes Mischen der Teilsendesignale mit dem direkten Empfangssignal, d.h. im Frequenzbereich der Trägerfrequenz, kann zum Beispiel unter Verwendung eines ausreichend schnellen A/D-Wandlers und eines geeigneten digitalen Signalprozessors (DSP) erfolgen.

Dem Verfahren liegt der Gedanke zugrunde, bei der Erzeugung des Detektionssignals die Phasenlage des Empfangssignals zu berücksichtigen. Die Phasenlage des Empfangssignals ist zwar aufgrund der Abhängigkeit von der Entfernung des reflektierenden Objekts von dem Dauerstrichradardetektor eine deterministische Größe, allerdings ist die Auswertung ihres Absolutwerts in der Praxis nicht aussagekräftig für eine Detektionsentscheidung.

Das erfindungsgemäße Verfahren beruht darauf, ein Sendesignal zu vervielfachen, so dass aus dem ursprünglichen Sendesignal mehrere Teilsendesignale entstehen, die sich bezüglich eines vorgegebenen Kriteriums voneinander unterscheiden, aber dennoch in einer Beziehung zueinander stehen. Bei dem vorgegebenen Kriterium kann es sich beispielsweise um die Frequenz handeln, was nachfolgend noch näher erläutert wird. Somit umfasst bei diesem Beispiel das von dem Sender letztlich abgestrahlte Sendesignal mehrere Frequenzen oder Frequenzbereiche als Teilsendesignale. Bei diesem Beispiel korrespondieren die Frequenzen bzw. Frequenzbereiche des Sendesignals mit den mehreren Teilempfangssignalen des reflektierten und detektierten Empfangssignals.

Durch das komplexe Mischen des Empfangssignals mit den einzelnen Teilsendesignalen wird für jedes Teilsendesignal ein komplexes Teilspektrum aus dem Empfangssignal gewonnen, welches sowohl ein jeweiliges Amplitudenspektrum als auch ein jeweiliges Phasenspektrum umfasst. Das komplexe Mischen des Empfangssignals mit einem jeweiligen Teilsendesignal kann beispielsweise dadurch erfolgen, dass das Empfangssignal sowohl mit der originalen Phasenlage eines jeweiligen Teilsendesignals als auch mit dem um 90° phasenverschobenen Teilsendesignal gemischt wird.

Für die weitere Auswertung werden nun die auf diese Weise erhaltenen Phasenspektren miteinander verglichen, wobei der Vergleich derart erfolgt, dass für mehrere unterschiedliche Frequenzwerte, die auch als Frequenzabtastwerte bezeichnet werden können, in den Phasenspektren für einen jeweiligen Frequenzwert ein entsprechender Phasenwert ermittelt wird und diese Phasenwerte miteinander verglichen werden.

Für diesen Vergleich kann ein Phasendetektionskriterium festgelegt werden, auf dessen Grundlage dann schließlich ein Detektionssignal erzeugt wird, welches die Detektion eines gegebenenfalls vorhandenen Objekts anzeigt.

Bevorzugt wird das vervielfachte, die Teilsendesignale umfassende Sendesignal vor dem Aussenden auf eine Trägerfrequenz aufwärts gemischt. Dies kann insbesondere sinnvoll sein, wenn später ein abwärts gemischtes Empfangssignal weiterverarbeitet wird. Alternativ kann das Sendesignal auch direkt auf der Trägerfrequenz erzeugt werden, beispielsweise mit Hilfe eines digitalen Signalprozessors.

Der Vergleich der Phasenspektren umfasst, dass für eine Mehrzahl von Frequenzwerten ein jeweiliges statistisches Merkmal, nämlich die Varianz oder die Standardabweichung, der aus den Phasenspektren abgetasteten Phasenwerte für den jeweiligen Frequenzwert bestimmt wird, und ein Vergleich der statistischen Merkmale durchgeführt wird. Aufgrund dieser statistischen Betrachtung ist es möglich, in dem Phasenspektrum des gesamten Empfangssignals eine Frequenz zu identifizieren, für die sich die Verteilung der Phasenwerte von einer unkorrelierten Verteilung unterscheidet. Der Vergleich der statistischen Merkmale liefert somit ein Kriterium dafür, dass die ermittelten Phasenwerte nicht auf einem Rauschsignal beruhen, sondern tatsächlich auf eine Detektion eines Objekts zurückzuführen sind.

Vorteilhafterweise umfasst der Vergleich der statistischen Merkmale das Ermitteln eines Minimums der statistischen Merkmale über unterschiedliche Frequenzwerte. Da bei einem Vorliegen von unkorrelierten Phasenwerten ein Vergleich verschiedener Spektren beim ausschließlichen Vorliegen eines Rauschsignals die Phasenwerte über ein Intervall $[0, 2\pi]$ gleichverteilt sind, weisen die Phasenwerte hier eine hohe statistische Streuung, auf, was sich in einem hohen Wert für die Varianz niederschlägt. Wenn jedoch bei einem bestimmten Frequenzwert die Phasenwerte eine gewisse Korrelation zueinander aufweisen, die auf eine Detektion eines Objekts zurückzuführen ist, nimmt diese Streuung ab, so dass die Varianz gegenüber den unkorrelierten Phasenwerten, bei denen lediglich Rauschsignale einen Beitrag zum Phasenspektrum leisten, die Varianz verringert ist. Somit liefert das Feststellen eines Minimums der statistischen Merkmale, beispielsweise eines Minimums der Varianz, einen Frequenzwert, der einer Beatfrequenz $f_B$ entspricht, und damit für die Erzeugung eines Detektionssignals genutzt werden kann.

Wie bereits erwähnt, können sich die Teilsendesignale gemäß einer besonders vorteilhaften Ausgestaltung hinsichtlich ihrer Frequenz als vorgegebenes Kriterium voneinander unterscheiden, wobei vorzugsweise der Frequenzabstand zwischen zwei benachbarten Teilsendesignalen für alle Teilsendesignale gleich ist. Vorteilhafterweise werden die gegebenenfalls zuvor aufwärts gemischten Teilsendesignale hierbei gleichzeitig ausgesendet. Letztlich wird dadurch erreicht, dass das in ausgesendete Signal in seinen Teilsendesignalen gewisse Unterscheidungsmerkmale (hier den Frequenzabstand) aufweist, die sich im Empfangssignal wiederfinden, und es ermöglichen, mehrere Phasenspektren zu erzeugen, die in einer bestimmten Beziehung zu dem ursprünglichen, unvervielfachten Sendesignal stehen.

Gemäß einer weiteren vorteilhaften Ausgestaltung können sich die Teilsendesignale hinsichtlich ihrer Polarisationsrichtung als vorgegebenem Kriterium voneinander unterscheiden. Dementsprechend weisen dann auch die Teilempfangssignale unterschiedliche Polarisationsrichtungen auf. Die Erzeugung der Teilsendesignale erfolgt beispielsweise dadurch, dass das ursprüngliche Sendesignal auf getrennte Sendezweige aufgeteilt wird und die Sendesignale dieser Sendezweige mittels jeweiliger in unterschiedliche Richtungen polarisierender Antennen ausgesendet werden. Dementsprechend sind entsprechende getrennte Empfangszweige vorgesehen, wobei jedem Sendezweig ein Empfangszweig mit korrespondierender Polarisationsrichtung zugeordnet ist. Auch in diesem Fall weist das ausgesendete Signal gewisse Unterscheidungsmerkmale auf, die sich im Empfangssignal wiederfinden, so dass auch hier mehrere Spektren erhalten werden, die in einer bestimmten Beziehung zu dem ursprünglichen, unvervielfachten Sendesignal stehen.

Gemäß noch einer anderen Ausgestaltung können sich die Teilsendesignale hinsichtlich des Sendezeitpunkts als vorgegebenes Kriterium voneinander unterscheiden.

Ferner ist es auch möglich, die vorstehend genannten Methoden zur Erzeugung der Unterscheidungsmerkmale beliebig zu kombinieren.

Gemäß einer weiteren vorteilhaften Ausgestaltung des Verfahrens umfasst das Erzeugen des Detektionssignals, dass ferner ein Amplitudendetektionssignal auf der Grundlage zumindest eines Amplitudenspektrums erzeugt wird, wenn das zumindest eine Amplitudenspektrum ein vorgegebenes Amplitudendetektionskriterium für die Detektion eines Objekts erfüllt. Für das Erzeugen des Detektionssignals wird also nicht nur das Phasendetektionssignal berücksichtigt, sondern zusätzlich auch das Amplitudendetektionssignal. Auf diese Weise lässt sich die Leistungsfähigkeit des Dauerstrichradardetektors weiter steigern.

In diesem Zusammenhang ist es von Vorteil, wenn das Erzeugen des Amplitudendetektionssignals umfasst, dass die Amplitudenspektren der Teilspektren zu einem Gesamtamplitudenspektrum aufsummiert werden, und dass das Amplitudendetektionssignal auf der Grundlage des Gesamtamplitudenspektrums erzeugt wird. Durch die Aufsummierung wird in vorteilhafter Weise die größtmögliche in dem Empfangssignal enthaltene Energie ausgenutzt. Bei einer gegebenen Gesamtsendeenergie geht dadurch letztlich im Vergleich zu einem Verfahren, bei dem diese Gesamtsendeenergie im Unterschied zum erfindungsgemäßen Verfahren nicht auf mehrere Teilsendesignale verteilt ist, keine Energie verloren, so dass keine Verschlechterung der Leistungsfähigkeit des Dauerstrichradardetektors bei der Erzeugung des Amplitudendetektionssignals hingenommen werden muss.

In diesem Zusammenhang ist es weiter von Vorteil, wenn das Gesamtamplitudenspektrum bandpassgefiltert wird. Dies erfolgt bevorzugt in einer Weise, dass das gefilterte Gesamtspektrum nur noch die Beatfrequenz $f_B$, die Dopplerfrequenz $f_D$ und/oder die entfernungsabhängige Differenzfrequenz $f_R$ umfasst.

Bei einer weiteren vorteilhaften Ausgestaltung umfasst das Erzeugen des Detektionssignals ferner, dass festgestellt wird, ob ein Amplitudendetektionssignal erzeugt worden ist, und das Detektionssignal nur dann erzeugt wird, wenn das festgestellte Amplitudendetektionssignal auf der Grundlage des Phasendetektionssignals als gültig verifiziert wurde. Dies bedeutet insbesondere, dass das Amplitudendetektionskriterium und das Phasendetektionskriterium für dieselbe Frequenz erfüllt sein müssen. Hierdurch kann die Falschalarmrate gesenkt werden und zudem die Detektionsrate erhöht werden, wenn ein für die Ermittlung des Amplitudendetektionskriteriums vorgegebener Schwellenwert abgesenkt wird, da die hierdurch erhöhte Wahrscheinlichkeit für einen Falschalarm durch die Verifizierung mittels des Phasendetektionssignals zumindest kompensiert werden kann.

Wie bereits vorstehend erwähnt wurde, kann das Amplitudendetektionskriterium das Unterschreiten und/oder Überschreiten eines Schwellenwerts umfassen und/oder das Phasendetektionskriterium das Unterschreiten eines Schwellenwertes umfassen. So kann beispielsweise das Amplitudendetektionskriterium erfüllt sein, wenn die Amplitude einen Amplitudenschwellwert überschreitet, und das Phasendetektionskriterium erfüllt sein, wenn die Varianz der Phasenwerte einen Phasenschwellenwert unterschreitet.

Gemäß einer weiteren vorteilhaften Ausgestaltung des Verfahrens kann der jeweilige Schwellenwert für unterschiedliche Betriebsbedingungen des Dauerstrichradardetektors derart angepasst werden, dass eine Falschalarmrate für die Erzeugung des Detektionssignals konstant ist. Alternativ können der oder die Schwellenwerte auch konstant gehalten werden.

Vorteilhafterweise weist das Sendesignal zumindest zwei Sinusschwingungen unterschiedlicher Frequenz auf, wobei jede dieser Sinusschwingungen zu mehreren jeweiligen Teilsendesignalen vervielfacht wird. Diese Ausgestaltung des erfindungsgemäßen Verfahrens stellt eine Weiterbildung des eingangs erwähnten Dual-CW-Radars durch das erfindungsgemäße Verfahren dar.

Alternativ kann die Frequenz des Sendesignals gemäß einer vorgegebenen, sich periodisch wiederholenden Rampe moduliert werden, wobei das derart modulierte Sendesignal zu den mehreren Teilsendesignalen vervielfacht wird. Dieses Verfahren entspricht einem erfindungsgemäß weitergebildeten Verfahren zum Betrieb eines FMCW-Radars. Die Rampe, gemäß der die Frequenz des Sendesignals moduliert wird, kann sich insbesondere linear ändern, wobei ein Profil der Rampe insbesondere steigend, fallend oder die Form eines Dachprofils aufweisen kann.

Weitere vorteilhafte Ausgestaltungen der Erfindung sind in den Unteransprüchen, der Beschreibung und den Zeichnungen angegeben.

Die Vorteile eines erfindungsgemäßen Dauerstrichradardetektors gemäß dem unabhängigen Vorrichtungsanspruch und bevorzugte Ausführungsbeispiele davon ergeben sich in analoger Weise aus den obigen Schilderungen der Vorteile und bevorzugten Ausgestaltungen des erfindungsgemäßen Verfahrens.

Die Erfindung wird nachfolgend anhand von Ausführungsbeispielen mit Bezug auf die Zeichnungen erläutert. Es zeigen:

| | |
|---|---|
| Fig. 1 bis 3 | verschiedene schematische Sendesignalspektren eines erfindungsgemäßen Verfahrens nach einzelnen Verfahrensschritten; |
| Fig. 4 bis 10 | verschiedene schematische Empfangssignalspektren des erfindungsgemäßen Verfahrens nach einzelnen Verfahrensschritten; |
| Fig. 11 und 12 | weitere schematische Sendesignalspektren des erfindungsgemäßen Verfahrens gemäß einem ersten Ausführungsbeispiel; |
| Fig. 13 bis 15 | verschiedene simulierte ROC-Kurven des erfindungsgemäßen Verfahrens gemäß dem ersten Ausführungsbeispiel; |
| Fig. 16 | ein weiteres Sendesignalspektrum des erfindungsgemäßen Verfahrens gemäß einem zweiten Ausführungsbeispiel; |
| Fig. 17 und 18 | verschiedene simulierte Empfangssignalspektren des erfindungsgemäßen Verfahrens gemäß dem zweiten Ausführungsbeispiel; und |
| Fig. 19 bis 21 | verschiedene simulierte ROC-Kurven des erfindungsgemäßen Verfahrens gemäß dem zweiten Ausführungsbeispiel. |

Im Folgenden wird das erfindungsgemäße Verfahren zum Betrieb eines Dauerstrichradardetektors an Hand von Beispielen beschrieben. Nach einer allgemeinen Einführung wird in einem ersten Ausführungsbeispiel die Anwendung bei einem Dual-CW-Radar und in einem zweiten Ausführungsbeispiel die Anwendung bei einem Linear Frequency Modulated Continuous Wave Radar (LFMCW-Radar) erläutert, wobei für beide Ausführungsbeispiele die Verbesserung der Detektorleistungsfähigkeit anhand von Receiver Operating Characteristic (ROC)-Kurven gezeigt wird. Bei einer solchen ROC-Kurve wird für verschiedene Parameter die Richtig-Positiv-Rate oder Detektionsrate, die das Verhältnis der Anzahl von detektierten Zielen zu einer Anzahl von tatsächlich vorhandenen Zielen angibt, gegen die Falsch-Positiv-Rate oder Falschalarmrate, die das Verhältnis der vorhandenen Anzahl der Falschalarme zu einer Normgröße angibt, z.B. einer maximal möglichen Anzahl von Falschalarmen, aufgetragen, wobei als Bezugsgröße zumeist ein bestimmter Zeitraum gewählt wird.

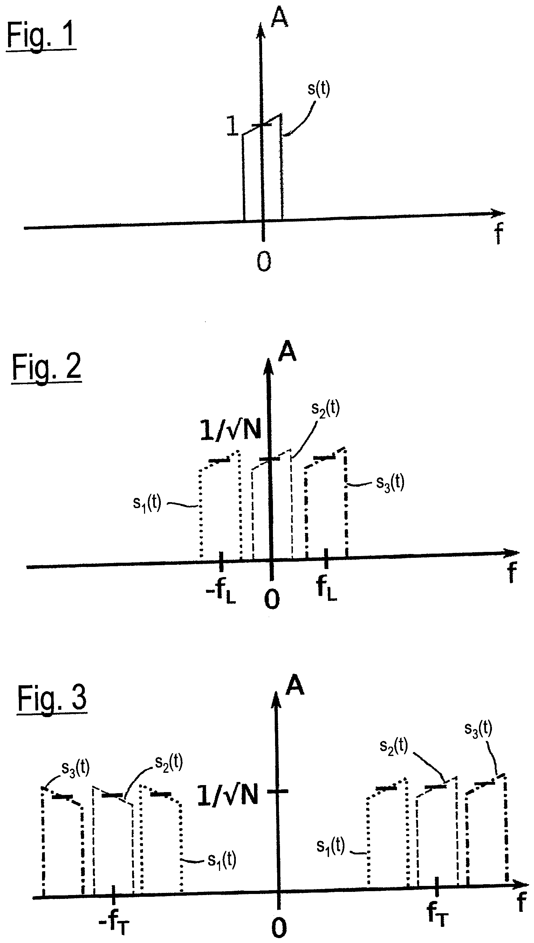

In Fig. 1 ist ein Sendesignal $s(t)$ für einen Dauerstrichradardetektor im komplexen Frequenzraum wiedergegeben. Das Sendesignal $s(t)$ ist hier stellvertretend mit einer gewissen Bandbreite dargestellt, wobei jedoch $s(t)$ selbstverständlich auch eine $\delta$-Funktion sein kann, d.h. einer Sinusschwingung entsprechen kann.

Zunächst wird das Sendesignal $s(t)$ vervielfacht, so dass $N$ Teilsendesignale $s_1(t)$, $s_2(t)$, $s_3(t)$ als Kopien des Sendesignals $s(t)$ entstehen, die jeweils durch einen auch als Lückenfrequenz bezeichneten Frequenzabstand $f_L$ voneinander getrennt sind (Fig. 2). Hier wird also eine Ausgestaltung zu Grunde gelegt, bei der sich die Teilsignale hinsichtlich ihrer Frequenz als vorgegebenem Kriterium unterscheiden.

Der Wert $N = 3$ wurde hier rein beispielhaft gewählt und ist nicht beschränkend. Wie anhand der Spektren deutlich wird, muss der Frequenzabstand $f_L$ mindestens doppelt so groß sein, wie die maximal zu erwartende Frequenzverschiebung, die detektiert werden soll, um Mehrdeutigkeiten durch Überlappungen mit angrenzenden Teilspektren zu vermeiden.

Das vervielfachte, nunmehr die Teilsendesignale $s_1(t)$, $s_2(t)$, $s_3(t)$ umfassende Sendesignal wird auf eine Trägerfrequenz $f_T$ aufwärts gemischt. Beim betrachteten Beispiel werden also die Teilsignale nicht direkt auf der Trägerfrequenz erzeugt, sondern gemäß einer vorteilhaften Ausgestaltung erst auf eine Trägerfrequenz aufwärts gemischt. Ein die aufwärts gemischten Teilsendesignale umfassendes komplexes Sendesignal-Spektrum ist in Fig.3 dargestellt. Die aufwärts gemischten Teilsendesignale $s_1(t)$, $s_2(t)$, $s_3(t)$ werden gleichzeitig gesendet, wobei eine Leistungsbeschränkung durch Skalierung der Amplituden der einzelnen Teilsendesignale z.B. mit einem Faktor $\frac{1}{\sqrt{N}}$ erfolgen kann, so dass die Gesamtsendeenergie aller Teilsendesignale $s_1(t)$, $s_2(t)$, $s_3(t)$ der Sendeenergie des ursprünglichen Sendesignals $s(t)$ entspricht.

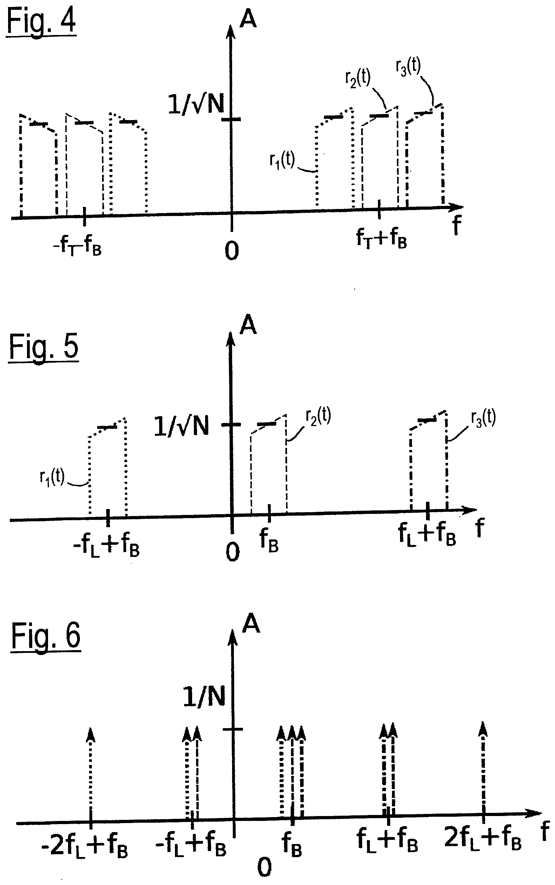

Das ausgesendete Signal wird von einem Objekt reflektiert und als Empfangssignal $r(t)$ von einem Empfänger detektiert. Das Amplitudenspektrum des Empfangssignals $r(t)$ ist in Fig. 4 komplex dargestellt. Die Teilempfangssignale $r_1(t)$, $r_2(t)$ und $r_3(t)$ des Empfangssignals $r(t)$ korrespondieren mit den Teilsendesignalen $s_1(t)$, $s_2(t)$ bzw. $s_3(t)$, was durch entsprechende gleichartige Liniierungen der Hüllkurven veranschaulicht ist.

Unter der Annahme, dass die Signalbandbreite des Sendesignals klein gegenüber der Trägerfrequenz $f_T$ ist, wird das Signal bei der Reflexion an einem bewegten Objekt aufgrund des Dopplereffekts um die Dopplerfrequenz $f_D$ verschoben und kommt nach der Zweiwegelaufzeit $T$ wieder an dem Empfänger des Radardetektors an. Bei einem LFMCW-Verfahren mit zeitabhängig modulierter Sendefrequenz führt die Signallaufzeit effektiv zu einer zusätzlichen Frequenzverschiebung des Empfangssignals um die entfernungsabhängige Frequenz $f_R$. Die Summe aus den beiden Frequenzanteilen ergibt die sogenannte Beatfrequenz $f_B = f_D + f_R$. Der besseren Übersicht halber wird hier stets auf die Beatfrequenz $f_B$ Bezug genommen, wobei für ein Dauerstrichradar ohne Modulation $f_R = 0$ angenommen wird, so dass nur die Dopplerfrequenz $f_D$ einen Beitrag leistet.

Das Empfangssignal $r(t)$ (Fig. 4) wird beim beschriebenen Beispiel durch Mischen mit einer Zwischenfrequenz, insbesondere zum Beispiel der Trägerfrequenz $f_T$, in ein komplexes Basisband abwärts gemischt. Das Amplitudenspektrum des abwärts gemischten Empfangssignals $r(t)$ ist in Fig. 5 dargestellt. Die Mittenfrequenzen der Teilempfangssignale $r_1(t)$, $r_2(t)$ und $r_3(t)$ befinden sich bei den Frequenzen $-f_L+f_B$, $f_B$ und $f_L+f_B$.

Dann wird das abwärts gemischte Empfangssignal $r(t)$ (Fig. 5) jeweils komplex mit einem der Teilsendesignale $s_1(t)$, $s_2(t)$, $s_3(t)$ (Fig. 2) gemischt. Die Amplituden der daraus resultierenden N komplexen Spektren sind einander überlagert in Fig. 6 dargestellt, wobei aus Gründen der Übersichtlichkeit die einzelnen Signale durch Pfeile bei der entsprechenden Mittenfrequenz repräsentiert sind, welche in der Darstellung ggf. etwas auseinander gerückt wurden, wenn sie auf dieselbe Frequenz fallen. Die Linierungen entsprechen den Liniierungen der Teilsendesignale in Fig. 2.

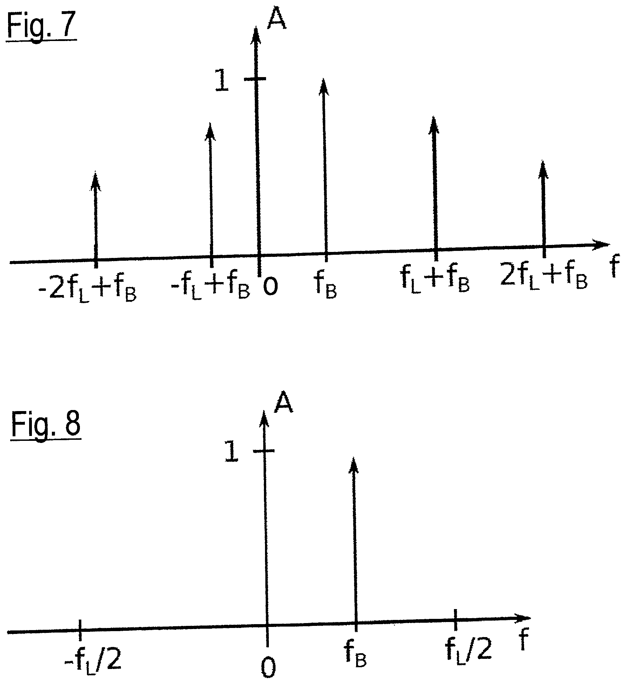

Die Amplituden der N komplexen Spektren werden nun aufsummiert, wodurch ein Summen- oder Gesamtamplitudenspektrum gemäß Fig. 7 entsteht. Es ist zu bemerken, dass die Amplitude bei $f_B$ die Amplitude 1 besitzt, was derjenigen Amplitude entspricht, die für ein Empfangssignalspektrum zu erwarten ist, welches auf ein nicht vervielfachtes Sendesignal (Fig. 1) zurückgeht. Anschließend wird das Gesamtamplitudenspektrum von Fig. 7 auf ein interferenzfreies Spektrum in dem Bereich $\left(-\frac{f_L}{2}; \frac{f_L}{2}\right)$, also von $-f_L/2$ bis $f_L/2$, beschränkt (Fig. 8).

Die Signalverarbeitung in einer Auswerteeinheit des Radardetektors ist so gestaltet, dass durch die Summation der Amplitudenspektren der einzelnen, durch Mischen mit den Teilsendesignalen entstanden Signalkopien des Empfangssignals im Ergebnis dasselbe Amplitudenspektrum wie bei einem herkömmlichen Verfahren erzeugt wird. Die Charakteristik des Gesamtamplitudenspektrums entspricht somit im Wesentlichen den Eigenschaften eines mittels eines herkömmlichen Auswerteverfahrens erzeugten Amplitudenspektrums, so dass die ROC beider Verfahren bezüglich der Amplitudenspektren vergleichbar ist.

Im einem weiteren Verfahrensschritt wird jedoch im Unterschied zu einem herkömmlichen Verfahren durch das vielfache Senden der Wellenform des ursprünglichen Sendesignals die ungenutzte Phaseninformation des Signals ausgewertet und zur Verbesserung der Erkennung von Extremstellen in den Spektren und damit zur Verbesserung der ROC eingesetzt.

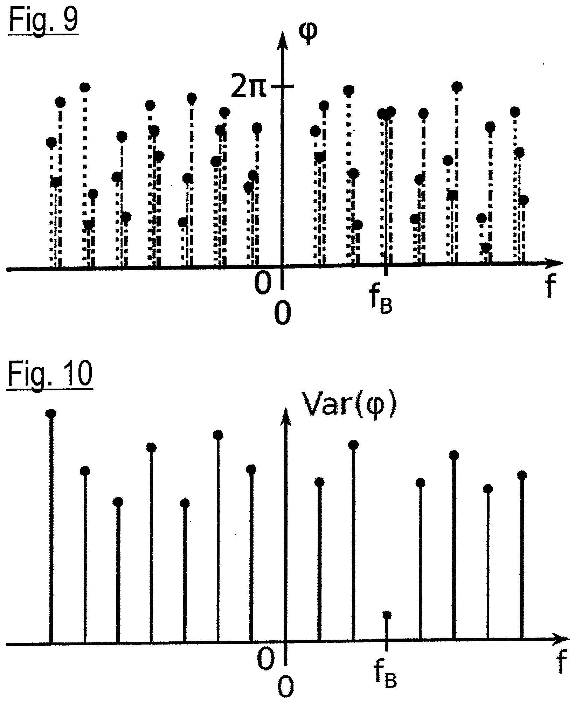

Es werden also die Phasenanteile der durch Mischen des Empfangssignals $r(t)$ mit den Teilsendesignalen $s_1(t)$, $s_2(t)$, $s_3(t)$ erzeugten N komplexen Spektren, deren Amplituden in Fig.6 und 7 dargestellt sind, ausgewertet. Dazu wird das Phasenspektrum für jedes der N einzelnen Spektren im Bereich $\left(-\frac{f_L}{2}; \frac{f_L}{2}\right)$, also von $-f_L/2$ bis $f_L/2$, berechnet. Eine Überlagerung der N Phasenspektren ist in Fig. 9 dargestellt, wobei ähnlich wie in Fig. 6 (dort durch Pfeile) die einzelnen Spektralanteile durch senkrechte Linien (mit Endpunkten) bei der entsprechenden Mittenfrequenz gemäß der Skalenbeschriftung der $f$-Achse repräsentiert sind, wobei die bei derselben Frequenz aufzutragenden Linien zur besseren Darstellung etwas auseinander gerückt wurden.

Die Phasenwerte $\varphi$ der einzelnen Spektren sind bei im Empfangssignal nicht vorhandenen Beatfrequenzen voneinander unabhängig, da sie wegen der in der Frequenz getrennten Kopien des Sendesignals von unabhängigem Rauschen abstammen. Die Phasenwerte $\varphi$ sind daher zwischen 0 und $2\pi$ entsprechend einem weißen Rauschen gleichverteilt. Bei der Beatfrequenz $f_B$ hingegen sind die Phasenwerte $\varphi$ in den einzelnen Spektren korreliert.

Diese Ähnlichkeit der Phasenwerte $\varphi$ in den N verschiedenen Spektren bei der Beatfrequenz $f_B$ kann als zusätzliches, aber grundsätzlich auch alleiniges statistisches Entscheidungskriterium bei der Peakdetektion genutzt werden. Mathematisch manifestiert sich die Ähnlichkeit zum Beispiel in einem geringeren Wert in der Varianz der Phasenwerte bei dieser Frequenz. Das entstehende Phasenvarianzspektrum ist in Fig. 10 schematisch dargestellt.

So kann zum Beispiel ein starkes Maximum im Gesamtamplitudenspektrum bei einer bestimmten Frequenz, für welche im Phasenspektrum jedoch eine hohe Phasenvarianz besteht, als Falschalarm identifiziert werden.

Umgekehrt kann ein nur schwach ausgeprägtes Maximum im Gesamtamplitudenspektrum bei einer bestimmten Frequenz bei Vorliegen eines Minimums der Phasenvarianz für diese Frequenz als Objektdetektionsereignis identifiziert werden.

Wie erläutert wurde, ergibt sich für eine Detektion alleine auf der Grundlage des Gesamtamplitudenspektrums gegenüber einem herkömmlichen Detektionsverfahren eine vergleichbare ROC. Wird zusätzlich die Information über die Phasenvarianz zur Entscheidungsfindung hinzugezogen, so verbessern sich das Detektionsvermögen und damit die ROC des Radarsystems.

Während vorstehend das erfindungsgemäße Verfahren in allgemeingültiger Weise erläutert wurde, wird nachfolgend die Anwendung bei zwei speziellen Dauerstrichradar-Verfahren beschrieben.

Bei einem herkömmlichen Dual-CW-Radar besteht das Sendesignal aus zwei gleichzeitig gesendeten unmodulierten Sinusschwingungen und wird hier kurz beschrieben, bevor die Erweiterung mittels der erfindungsgemäßen Ausnutzung von Phaseninformation zur Verbesserung der ROC gemäß einem ersten Ausführungsbeispiel erläutert wird.

Das Sendesignal $s_{dual}(t)$ eines herkömmlichen Dual-CW-Radars besteht aus zwei gleichzeitig gesendeten unmodulierten Sinusschwingungen $s_1(t)$ und $s_{1'}(t)$ mit einem Frequenzunterschied von $\Delta f = |f_1 - f_{1'}|$, wobei $f_1$ und $f_{1'}$ *die* Frequenzen der beiden Schwingungen sind:

$$s_1(t) \;=\; a_{\mathbf{dual}}\cos(2\pi f_1 t) \qquad\qquad (1)$$

$$s_{1'}(t) \;=\; a_{\mathbf{dual}}\cos(2\pi f_{1'} t) \qquad\qquad (2)$$

Die Amplituden der beiden Signale betragen identisch $a_{dual}$. Dadurch ergibt sich

$$s_{\mathbf{dual}}(t) = a_{\mathbf{dual}}(s_1(t) + s_{1'}(t)). \qquad\qquad (3)$$

Die mittlere Leistung des Signals (3) ergibt sich zu

$$\lim_{T\to\infty}\frac{1}{2T}\int_{-T}^{T}|s_{\mathbf{dual}}(t)\mathrm{d}t|^2 = a_{\mathbf{dual}}^2 = \bar{P} \qquad\qquad (4)$$

und es gilt

$$a_{\mathbf{dual}} = \sqrt{\bar{P}}. \qquad\qquad (5)$$

$$f_c \;=\; \frac{f_1 + f_{1'}}{2}$$

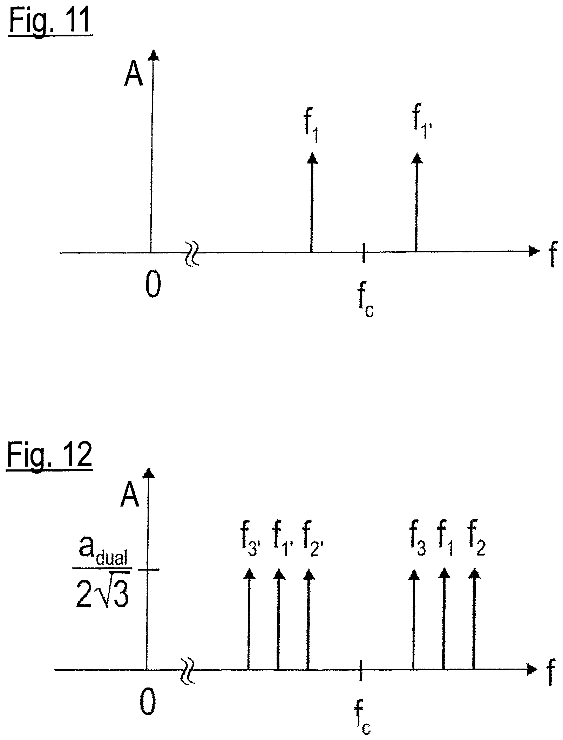

Das einseitige Amplitudenspektrum des reellen Sendesignals ist in Fig. 11 dargestellt. Dabei ist die Mittenfrequenz des Sendesignals.

Unter der Annahme eines Punktziels mit der Radialgeschwindigkeit v (also der Geschwindigkeit mit der sich ein Gegenstand von dem Detektor weg bzw. auf ihn zubewegt), dem Abstand $R$ und einem beliebigem Radarquerschnitt als detektiertes Objekt erfährt ein gesendetes Signal durch die Reflexion am Objekt eine Dopplerverschiebung um

$$f_{\mathrm{D}} = \frac{2vf}{c} \qquad\qquad (6)$$

sowie eine Zeitverzögerung um

$$\tau = \frac{2R}{c}, \qquad\qquad (7)$$

wobei $c$ die Lichtgeschwindigkeit und $f$ die Sendefrequenz ist. Zudem erfährt es eine Dämpfung, die sich mit der Radargleichung bestimmen lässt und die zu einer Verringerung der Amplitude führt.

Ausgehend von Gleichung (1) und unter der Annahme, dass $\Delta f \ll f_c$ gilt, lässt sich das Empfangssignal schreiben als

$$r(t) = r_1(t) + r_1'(t) = b_{\mathrm{dual}}\cos(2\pi(f_1 + f_{\mathrm{D}})(t + \tau)) + b_{\mathrm{dual}}\cos(2\pi(f_{1'} + f_{\mathrm{D}})(t + \tau)), \quad (8)$$

wobei $b_{dual}$ die identische Amplitude der beiden Komponenten des Empfangssignals ist.

Durch komplexes Mischen der beiden Sendesignale mit dem Empfangssignal und anschließender Tiefpassfilterung mit einem Tiefpass mit den Grenzen des Durchlassbereichs bei der maximal zu erwartenden Dopplerfrequenz $\pm f_{D,max}$ erhält man die beiden Basisbandsignale mit den Inphasenkomponenten

$$d_{1,\mathrm{I}}(t) = \mathrm{TP}_{f_{D,max}}\{s_1(t)r(t)\} = \frac{a_{\mathrm{dual}}b_{\mathrm{dual}}}{2}\cos(-2\pi f_{\mathrm{D}}t + 2\pi(f_1 + f_{\mathrm{D}})\tau) \qquad (9)$$

$$d_{1',\mathrm{I}}(t) = \mathrm{TP}_{f_{D,max}}\{s_{1'}(t)1'(t)\} = \frac{a_{\mathrm{dual}}b_{\mathrm{dual}}}{2}\cos(-2\pi f_{\mathrm{D}}t + 2\pi(f_{1'} + f_{\mathrm{D}})\tau) \qquad (10)$$

und den entsprechenden Quadraturkomponenten

$$d_{1,\mathrm{Q}}(t) = \frac{a_{\mathrm{dual}}b_{\mathrm{dual}}}{2}\sin(2\pi f_{\mathrm{D}}t - 2\pi(f_1 + f_{\mathrm{D}})\tau) \qquad\qquad (11)$$

$$d_{1',\mathrm{Q}}(t) = \frac{a_{\mathrm{dual}}b_{\mathrm{dual}}}{2}\sin(2\pi f_{\mathrm{D}}t - 2\pi(f_{1'} + f_{\mathrm{D}})\tau). \qquad\qquad (12)$$

Die komplexen Basisbandsignale sind also

$$d_1(t) = d_{1,\mathrm{I}}(t) + jd_{1,\mathrm{Q}}(t) \qquad\qquad (13)$$

$$d_{1'}(t) = d_{1',\mathrm{I}}(t) + jd_{1',\mathrm{Q}}(t). \qquad\qquad (14)$$

Die beiden Signale der Gleichungen (13) und (14) enthalten die gesuchten Informationen über die Entfernung und die Geschwindigkeit des Objekts. Die Dopplerfrequenz kann durch eine Spektralschätzung ermittelt werden und die Entfernung über einen Phasenvergleich der beiden Basisbandsignale. Beispielsweise kann dazu das Kreuzspektrum herangezogen werden:

$$X_1(f) = \mathrm{FFT}\{d_1(t)\} \cdot \mathrm{FFT}\{d_{1'}(t)\}^* \qquad\qquad (15)$$

In $X(f)$ können die enthaltenen Dopplerfrequenzen mittels einer Schwellenwertdetektion im Amplitudenspektrum

$|X(f)|$ ermittelt werden bzw. bei einem Einzelzielszenario mittels Maximumsuche die Dopplerfrequenz $f_D$ geschätzt werden. Der Wert des Phasengangs $\angle X(f)$ an der Stelle $\hat{f}_D$ liefert einen Schätzwert für die Differenzphase

$$\Delta\hat{\phi} = \angle X(\hat{f}_D), \qquad (16)$$

aus der sich die Laufzeit

$$\hat{\tau} = \frac{\Delta\hat{\phi}}{2\pi\Delta f_1} \qquad (17)$$

und daraus die Entfernung

$$\hat{R} = \frac{1}{2}\hat{\tau}c \qquad (18)$$

schätzen lässt.

Das Erzeugen des Sendesignals kann auch mittels direkter digitaler Synthese (DDS) auf einer Zwischenfrequenz (ZF) mit anschließendem (reellen) Aufwärtsmischen auf die eigentliche Trägerfrequenz $f_c$ stattfinden. Am Empfänger muss dann reell abwärts auf die Zwischenfrequenz gemischt werden, bei welcher dann digitalisiert wird. Das Mischen ins komplexe Basisband wird dann digital durchgeführt. Diese Implementierung kann insbesondere bei der im folgenden beschriebenen Erweiterung auf Multi-CW-Radar von Vorteil sein, falls sehr viele Frequenzen verwendet werden, da in dem Fall der Abstimmungsaufwand des Frequenzverteilungsnetzwerks eine analoge Implementierung erschweren würde.

Im Folgenden wird nun die Erweiterung des vorstehend beschriebenen Dual-CW-Verfahrens gemäß einem ersten Ausführungsbeispiel erläutert.

Dazu werden anstelle der beiden gleichzeitig gesendeten, unmodulierten Sinusschwingungen $s_1(t)$ und $s_{1'}(t)$ 2N unmodulierte Sinussignale $s_i(t)$ und $s_{i'}(t)$ mit $i \in \{1, 2, ..., N\}$ gleichzeitig gesendet:

$$s_i(t) \;=\; a_{\mathbf{multi}}\cos(2\pi f_i t) \qquad (19)$$

$$s_{i'}(t) \;=\; a_{\mathbf{multi}}\cos(2\pi f_{i'} t) \qquad (20)$$

Da nicht nur zwei, sondern 2N unmodulierte Sinusschwingungen gleichzeitig gesendet werden, kann das erfindungsgemäße Verfahren als Multi-CW-Verfahren bezeichnet werden. Das Multi-CW-Sendesignal lässt sich als Summe der einzelnen Sinussignale $s_i(t)$ und $s_{i'}(t)$ schreiben:

$$s_{\mathbf{multi}}(t) = \sum_{i=1}^{N}\left(s_i(t) + s_{i'}(t)\right) \qquad (21)$$

Dabei ist $a_{multi}$ die Amplitude der einzelnen Sinussignale $s_i(t)$, $s_{i'}(t)$, wobei diese so gewählt wird, dass die Leistung des Multi-CW-Sendesignals die des Dual-CW-Sendesignals nicht übersteigt:

$$\lim_{T\to\infty}\frac{1}{2T}\int_{-T}^{T}\left|s_{\mathbf{multi}}(t)\mathrm{d}t\right|^2 = Na_{\mathbf{multi}}^2 = \bar{P} \Leftrightarrow a_{\mathbf{multi}} = \sqrt{\frac{\bar{P}}{N}} = \frac{a_{\mathbf{dual}}}{\sqrt{N}} \qquad (22)$$

Die einzelnen Sinussignale $s_i(t)$, $s_{i'}(t)$ sind dabei in der Frequenz durch die Lückenfrequenz $f_L$ getrennt:

$$f_i \;=\; f_1 + (-1)^i\left\lfloor\frac{i}{2}\right\rfloor f_L \qquad (23)$$

$$f_{i'} = f_{1'} + (-1)^i \left\lfloor \frac{i}{2} \right\rfloor f_L \tag{24}$$

Für die Wahl der Lückenfrequenz $f_L$ gilt die Bedingung

$$f_L > 2|f_{\mathrm{D,max}}|, \tag{26}$$

um Mehrdeutigkeiten durch unerwünschte Mischprodukte der angrenzenden Teilspektren im Detektionsbereich zu vermeiden. Das einseitige Spektrum eines verdreifachten Multi-CW-Sendesignals ist in Fig. 12 dargestellt.

Da die Differenzfrequenz zwischen zwei zusammengehörigen Sinusschwingungen

$$\Delta f_i = |f_i - f_{i'}| = |f_1 - f_{1'}| \quad \forall i \tag{27}$$

ist, gilt mit Gleichung (18) für den Eindeutigkeitsbereich der Entfernungsmessung

$$R_{\mathrm{max}} = \frac{c}{2\Delta f_i}. \tag{28}$$

Anhand von Gleichung (28) lässt sich der Frequenzabstand berechnen, der für ein gegebenes Szenario notwendig ist.

Es wird wiederum ein Punktziel im Abstand $R$ mit der Radialgeschwindigkeit v und beliebigem Radarquerschnitt als detektiertes Objekt angenommen. Mit der Dopplerverschiebung $f_D$ und der Zweiwegelaufzeit $T$ lässt sich das Empfangssignal analog zu Gleichung (8) schreiben als

$$r_{\mathrm{multi}}(t) = \sum_{i=1}^{N} \left( r_i(t) + r_{i'}(t) \right) =$$

$$\sum_{i=1}^{N} \left[ b_{\mathrm{multi}} \left( \cos(2\pi(f_i + f_D)(t - \tau)) + \cos(2\pi(f_{i'} + f_D)(t - \tau))) \right], \tag{29}$$

wobei $b_{multi\_}$ die Amplitude der einzelnen Sinussignale des Empfangssignals ist und durch die Radargleichung berechnet werden kann.

Nachfolgend werden die einzelnen Sendesignale $s_i(t)$ und $s_{i'}(t)$ jeweils komplex mit dem Summenempfangssignal aus Gleichung (29) gemischt und anschließend mit den Grenzen des Durchlassbereichs bei der maximal zu erwartenden Dopplerfrequenz $\pm f_{D,max}$ tiefpassgefiltert. Dadurch erhält man die 2N Inphasenkomponenten

$$d_{i,\mathrm{I}}(t) = \mathrm{TP}_{f_{D,max}}\{s_i(t)r_{\mathrm{multi}}(t)\} = \frac{a_{\mathrm{multi}}b_{\mathrm{multi}}}{2}\cos(-2\pi f_D t + 2\pi(f_i + f_D)\tau) \tag{30}$$

$$d_{i',\mathrm{I}}(t) = \mathrm{TP}_{f_{D,max}}\{s_{1'}(t)r_{\mathrm{multi}}(t)\} = \frac{a_{\mathrm{multi}}b_{\mathrm{multi}}}{2}\cos(-2\pi f_D t + 2\pi(f_{i'} + f_D)\tau) \tag{31}$$

und die entsprechenden 2N Quadraturkomponenten

$$d_{i,\mathrm{Q}}(t) = \frac{a_{\mathrm{multi}}b_{\mathrm{mutli}}}{2}\sin(2\pi f_D t - 2\pi(f_i + f_D)\tau) \tag{32}$$

$$d_{i',\mathbf{Q}}(t) \;=\; \frac{a_{\mathrm{multi}}b_{\mathrm{multi}}}{2}\sin(2\pi f_{\mathrm{D}}t - 2\pi(f_{i'} + f_{\mathrm{D}})\tau). \tag{33}$$

Die komplexen Basisbandsignale sind also

$$d_i(t) \;=\; d_{i,\mathrm{I}}(t) + j d_{i,\mathbf{Q}}(t) \tag{34}$$

$$d_{i'}(t) \;=\; d_{i',\mathrm{I}}(t) + j d_{i',\mathbf{Q}}(t). \tag{35}$$

Nun werden die N Kreuzspektren berechnet:

$$X_i(f) = \mathrm{FFT}\{d_i(t)\} \cdot \mathrm{FFT}\{d_{i'}(t)\}^* \tag{36}$$

Zur Detektion werden nun einerseits das Summenspektrum

$$|X(f)| = \left| \sum_{i=1}^{N} X_i(f) \right| \tag{37}$$

und andererseits die einzelnen Phasengänge der Differenzphasen

$$\Delta\phi_i(f) = \angle X_i(f) \tag{38}$$

herangezogen. In $X(f)$ werden die Maxima über einem eingestellten Schwellenwert detektiert, um die L Dopplerfrequenzen $\hat{f}_{D,l}$ zu schätzen, welche anschließend durch die Stichprobenvarianz der Differenzphasen $\mathrm{Var}_i\{\Delta\Phi_i(\hat{f}_{D,l})\}$ bestätigt oder verworfen werden.

Die Bestimmung von Geschwindigkeit und Entfernung erfolgt dann analog zu den Gleichungen (16) bis (18), indem die Phasenschätzungen

$$\Delta\hat{\phi}_i(\hat{f}_{\mathrm{D},l}) \tag{39}$$

gemittelt werden:

$$\Delta\bar{\hat{\phi}}_l = \frac{1}{N} \sum_{i=1}^{N} \Delta\phi_i(\hat{f}_{\mathrm{D},l}) \tag{40}$$

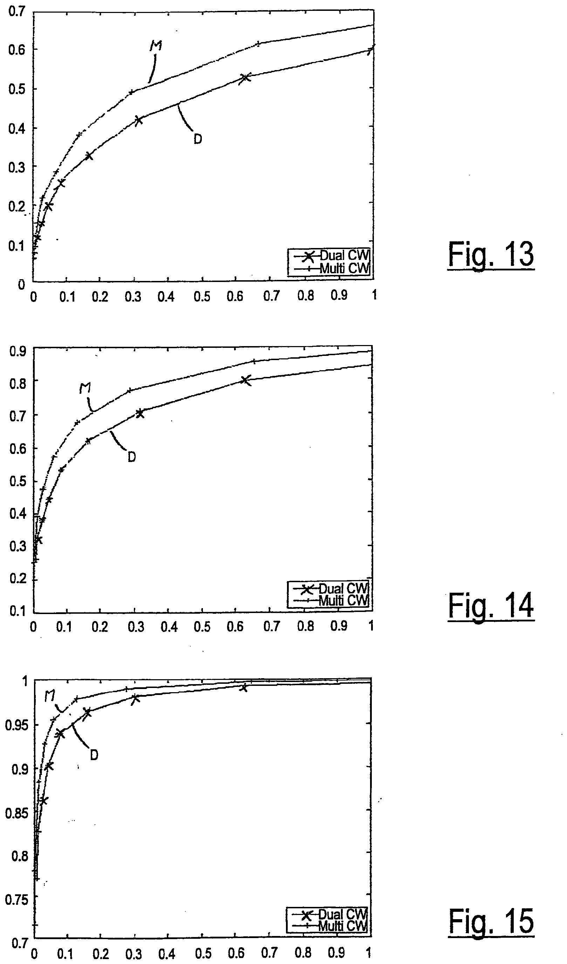

Im Rahmen einer Simulation wurden jeweilige ROC-Kurven für ein Dual-CW-Verfahren und ein Multi-CW-Verfahren für Signal-Rausch-Verhältnisse (SNR) von 5, 7 und 10 dB simuliert. Die resultierenden Kurven sind in Fig. 13 (5 dB), 14 (7 dB) und 15 (10 dB) dargestellt, wobei auf der Abszisse die Falschalarmrate und auf der Ordinate die Detektionsrate dargestellt ist. Als Parameter wurde die Detektionsschwelle im Amplitudenspektrum variiert, wobei die Detektionschwelle von links nach rechts bzw. von unten nach oben verringert wurde. Die Kurven für das Dual-CW-Verfahren sind mit dem Bezugszeichen D und die Kurven für das erfindungsgemäße Multi-CW-Verfahren mit dem Bezugszeichen M gekennzeichnet. Die Simulationen wurden jeweils für 6 Frequenzen und einem Schwellenwert für die Phasenvarianz von 3 gerechnet.

Es wurden jeweils 10000 Iterationen durchgeführt, über deren Ergebnisse dann gemittelt wurde. Die Falschalarmrate ist hierbei anders als üblich als mittlere Anzahl an Fehldetektionen pro Messung angegeben und nicht pro Entscheidung festgelegt. Dies bedeutet, dass die Zahlen auf den Achsen auch der Wahrscheinlichkeit für eine korrekte Detektion bzw. Fehldetektion pro Messung entsprechen.

Beim Vergleich der Kurven in Fig. 13 bis 15 zeigt sich, dass die Detektionsleistungsfähigkeit von Multi-CW gegenüber Dual-CW um 5% -10% besser ist, wobei der Vorteil mit steigendem SNR schwindet, da dann schon die Detektion allein auf der Grundlage des Amplitudenspektrums recht gut ist. Somit besteht ein wesentlicher Vorteil der Erfindung darin, dass die ROC eines Radardetektors bei schwachem SNR verbessert wird.

Nachfolgend wird nun das erfindungsgemäße Prinzip zur Ausnutzung von Phaseninformation gemäß einem zweiten Ausführungsbeispiel auf ein LFMCW-Radarsystem angewendet. Dies erfindungsgemäße Verfahren kann als Multi-LFMCW-Verfahren bezeichnet werden.

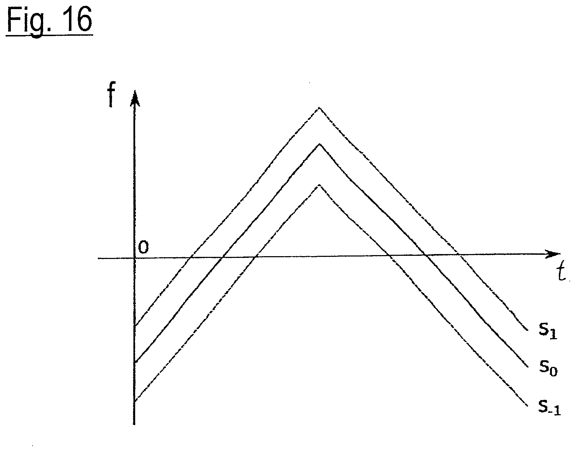

Die Wellenform des Sendesignals im Basisband besteht aus einem Up- und einem Downchirp (siehe Fig. 16). Beide Rampen besitzen dieselbe Steigung und sind symmetrisch zur Nullfrequenz. Der Frequenzverlauf genügt

$$f(t) = \begin{cases} -\Delta f + \frac{2\Delta f}{T_\mathbf{R}} t, & t \in [0, T_\mathbf{R}] \\ \Delta f - \frac{2\Delta f}{T_\mathbf{R}}(t - T_\mathbf{R}), & t \in [T_\mathbf{R}, 2T_\mathbf{R}] \end{cases} . \tag{41}$$

Dabei ist $T_R$ die sogenannte Steigzeit, d.h. die Zeitdifferenz zwischen der kleinsten und der größten Frequenz der Frequenzrampe in Fig. 16, und $\Delta f = \frac{f_{max} - f_{min}}{2}$ beschreibt die halbe Frequenzdifferenz zwischen diesen beiden Frequenzen. Es versteht sich, dass die Wellenform des Sendesignals nicht auf diesen beispielhaften Dachprofil-Verlauf beschränkt ist, sondern einen beliebigen Verlauf, insbesondere auch rein steigende oder rein fallende Rampen, aufweisen kann.

Wie nachfolgend noch näher erläutert wird, wird für die Durchführung des erfindungsgemäßen Multi-LFMCW-Verfahren im vorliegenden Beispiel diese Wellenform gleichzeitig dreifach, d.h. mit drei im Frequenzbereich um den Frequenzversatz $f_L$ getrennten Teilsendesignalen $s_1$, $s_0$ und $s_{-1}$, gesendet, wobei $s_0$ dem ursprünglichen, nicht vervielfältigen Sendesignal entspricht, wie es im herkömmlichen LFMCW-Verfahren verwendet wird.

Im Falle einer nicht konstanten Frequenz des Sendesignals muss für die korrekte Beschreibung des Zeitsignals über den zeitabhängigen Frequenzverlauf wie folgt integriert werden:

$$s(t) = \exp(j2\pi \int f(t)\mathrm{d}t) \tag{42}$$

Daraus resultiert für das Sende- ($s(t)$) und Empfangssignal ($r(t)$) im komplexen Basisband die in den Gleichungen (43) und (44) dargestellte Form, bei der die Integration über die Dreiecksfunktion des Frequenzverlaufs bereits durchgeführt wurde.

Mit der Zweiwegelaufzeit $T$ ergeben sich Sende- und Empfangssignal zu:

$$s(t) = \begin{cases} A \exp(j2\pi t(-\Delta f + \frac{\Delta f}{T_R} t)), & t \in [0, T_R - \tau] \\ A \exp(j2\pi t(3\Delta f - \frac{\Delta f}{T_R} t)), & t \in [T_R, 2T_R - \tau] \end{cases} \tag{43}$$

$$r(t) = \begin{cases} B \exp(j2\pi(t - \tau)(-\Delta f + f_D + \frac{\Delta f}{T_R}(t - \tau)) - j2\pi\tau f_0), & t \in [0, T_R - \tau] \\ B \exp(j2\pi(t - \tau)(3\Delta f + f_D - \frac{\Delta f}{T_R}(t - \tau)) - j2\pi\tau f_0), & t \in [T_R, 2T_R - \tau] \end{cases} \tag{44}$$

Die Einschränkung des Definitionsbereichs um den Anteil $T$ ist durch die fehlende Differenzierbarkeit an der Grenze zwischen Up- und Downchirp bedingt. Das Mischen auf die Trägerfrequenz $f_c$ und das anschließende Abwärtsmischen ins Basisband ist nicht explizit dargestellt.

Durch das Mischen von Sende- und Empfangssignal entsteht das Detektionssignal

$$\begin{aligned} d(t) &= s(t)r(t)^* \\ &= \begin{cases} AB \exp(j2\pi t(\frac{2\Delta f}{T_R}\tau - f_D) + j2\pi\tau(-\Delta f + f_D - \frac{\Delta f}{T_R}\tau)), & t \in [0, T_R - \tau] \\ AB \exp(j2\pi t(-\frac{2\Delta f}{T_R}\tau - f_D) + j2\pi\tau(3\Delta f + f_D + \frac{\Delta f}{T_R}\tau)), & t \in [T_R, 2T_R - \tau] \end{cases} \end{aligned} \tag{45}$$

Die Geschwindigkeits- und Entfernungsbestimmung erfolgt durch den Vergleich der Maxima der Fouriertransformierten von Up- und Downchirp.

Die Maxima für ein detektiertes Objekt in den zwei Spektren sind symmetrisch um die Dopplerfrequenz für dieses Objekt mit einem unbekannten Frequenzbetrag versetzt, wie am zeitabhängigen Teil des Arguments der Exponentialfunktion in Gleichung (45) ersichtlich wird. Mit Hilfe von Gleichung (7) und der Dopplerformel für die Geschwindigkeit gemäß Gleichung (6) kann dies wie folgt beschrieben werden:

$$f_{\text{Up}} = \frac{2\Delta f}{T_R}\tau - f_D = \frac{2\Delta f}{T_R}\cdot\frac{2R}{c} - \frac{2v}{c}f_0 = \frac{4\Delta f}{T_R c}\cdot R - \frac{2f_0}{c}\cdot v = \alpha\cdot R - \beta\cdot v \quad (46)$$

$$f_{\text{Down}} = -\alpha\cdot R - \beta\cdot v \quad (47)$$

Es ist für das Einzelzielszenario zu erkennen, dass durch Addition und Subtraktion der Gleichungen (46) und (47) die Entfernung $R$ und die Geschwindigkeit $v$ berechnet werden können als:

$$R = \frac{f_{\text{Up}} - f_{\text{Down}}}{2\alpha} \quad (48)$$

$$v = \frac{-f_{\text{Up}} - f_{\text{Down}}}{2\beta} \quad (49)$$

Die Signalverarbeitung des Multi-LFMCW-Verfahrens wird mit Bezug auf Fig. 1 bis 8 erläutert. Zunächst wird das Sendesignal $s(t)$ gemäß Gleichung (43) - wie zuvor bereits erwähnt - um Vielfache der Lückenfrequenz $f_L$ verschoben und in seiner Amplitude skaliert, um die Teilsendesignale $s_1(t)$, $s_0(t)$ und $s_{-1}(t)$ zu generieren. Im vorliegenden Beispiel wird eine Verdreifachung gewählt (siehe Fig. 2 und 16 und Gleichung (50)). Der Skalierungsfaktor für die Leistungsnormierung ergibt sich daher zu $\frac{1}{\sqrt{3}}$:

$$s(t)_{\text{multi}} = \sum_{k=-1}^{1} s_i(t) = \frac{1}{\sqrt{3}}\sum_{k=-1}^{1} s(t)\cdot\exp(j2\pi f_L k) \quad (50)$$

Hinsichtlich der Wahl der Lückenfrequenz $f_L$ muss darauf geachtet werden, dass die erwarteten Beatfrequenzen der Up- und Downchirps in den Gleichungen (46) und (47) die Lückenfrequenz $f_L$ im Betrag nicht überschreiten, da es sonst zu Mehrdeutigkeiten durch die angrenzenden Teilspektren kommt. Dadurch wird eine untere Grenze für die Lückenfrequenz festgelegt:

$$f_L > 2|f_{\text{beat,max}}| \quad (51)$$

Nach dem Empfangen und Mischen des Empfangssignals im komplexen Basisband mit den Einzelsendesignalen $s_i(t)$

$$d_i(t)_{\text{multi}} = s_i(t)r(t)^*_{\text{multi}}, \quad (52)$$

wird die Addition der Amplitudenspektren durchgeführt (entsprechend dem Schritt von Fig. 6 nach Fig. 7):

$$D(f)_{\text{multi}} = \sum_{k=-1}^{1} \text{FFT}\{d_i(t)_{\text{multi}}\} \quad (53)$$

EP 3 064 960 B1

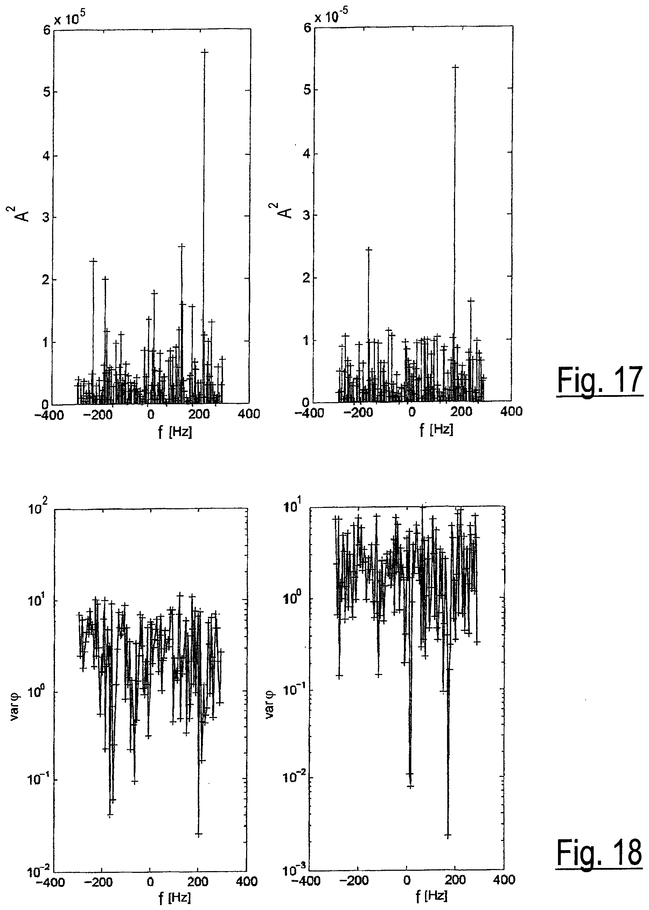

In Fig. 17 sind simulierte Leistungsdichtespektren ($A^2$) von Upchirp (links) und Downchirp (rechts) des Multi-LFMCW-Radars dargestellt. Die Spektren sind nicht identisch, da trotz Verwendung derselben Rauschsimulationsalgorithmen in beiden Systemen die Rauschzusammensetzung aufgrund unterschiedlicher spektraler Anteile unterschiedlich ist.

Die Phasenvarianzspektren werden entsprechend der zuvor beschriebenen Vorgehensweise erzeugt und sind in Fig. 18 für Upchirp (links) und Downchirp (rechts) exemplarisch dargestellt. Es ist gut zu erkennen, dass die Frequenzen mit niedrigen Phasenvarianzwerten mit den Frequenzen der Maxima im Leistungsdichtespektrum in Fig. 17 zusammenfallen.

Die Phaseninformation wird in diesem Beispiel bei der Erzeugung der ROC-Kurven als zweites Entscheidungsmerkmal eingesetzt. Nach einer Detektion der Maxima über einem Schwellenwert im Ampliduden- bzw. Leistungsdichtespektrum werden mittels einer weiteren Schwellenwertentscheidung im Phasenvarianzspektrum Fehldetektionen ausgeschlossen. Dadurch ergibt sich eine bessere ROC als bei einem herkömmlichen LFMCW-Verfahren, was nachfolgend anhand von Simulationsergebnissen illustriert wird.

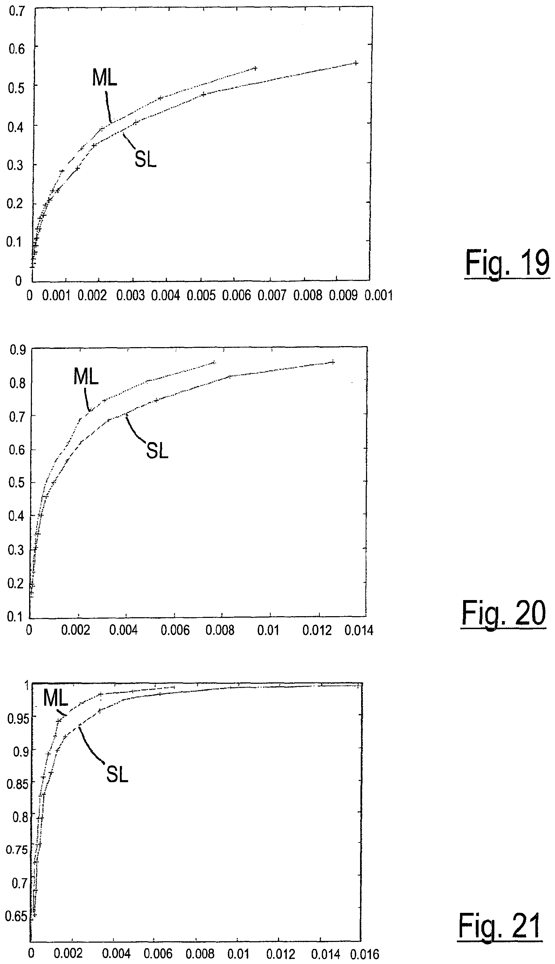

Für ein Multi-LFMCW-Verfahren wurden Simulationen bei SNR-Werten von 10, 12 und 15 dB und verschiedenen Phasenvarianzschwellen durchgeführt. Die daraus entstandenen Kurven für die ROC sind in Fig. 19 (10 dB, Phasenvarianzschwelle 0,8), 20 (12 dB, Phasenvarianzschwelle 0,5) und 21 (15 dB, Phasenvarianzschwelle 0,3) dargestellt, wobei auf der Abszisse die Falschalarmrate und auf der Ordinaten die Detektionsrate dargestellt ist. Auch hier wurde als Parameter die Detektionsschwelle im Amplitudenspektrum variiert, wobei die Detektionschwelle von links nach rechts bzw. von unten nach oben verringert wurde. Die Kurven für das herkömmliche LFMCW-Verfahren sind mit dem Bezugszeichen SL und die Kurven für das erfindungsgemäße Multi-LFMCW-Verfahren mit dem Bezugszeichen ML gekennzeichnet. Im Gegensatz zu den ROC-Kurven für das Dual- und Multi-CW-Verfahren wurde die übliche Normierung der Falschalarmrate auf die Anzahl an Entscheidungen gewählt. Der Maximalwert beträgt also 1.

Alle Simulationen wurden mit 15 Simulationspunkten bei 10000 Iterationen und für eine Phasenvarianzschwelle von 0,8 erstellt. Bei dem Multi-LFMCW-Verfahren ergibt sich insbesondere im unteren SNR-Bereich eine Verbesserung in der ROC gegenüber einer einfach gesendeten Wellenform im Bereich von 5% bis 10%. Bei höheren SNR-Werten wird der Vorteil geringer. Dies ist damit zu erklären, dass im oberen SNR-Bereich die Detektion im Amplitudenspektrum bereits recht gut ist, so dass die Verbesserung durch die erfindungsgemäße Betrachtung der Phasenvarianz die ROC weniger ausgeprägt ist.

Alternativ oder zusätzlich zu der für die vorstehend erläuterten Ausführungsbeispiele beschriebenen Erzeugung der Teilsendesignale mit unterschiedlichen Frequenzen können auch Teilsendesignale verwendet werden, die sich zum Beispiel hinsichtlich ihrer Polarisationsrichtung voneinander unterscheiden. Dementsprechend weisen dann auch die Teilempfangssignale unterschiedliche Polarisationsrichtungen auf. Die Erzeugung der Teilsendesignale erfolgt beispielsweise dadurch, dass das ursprüngliche Sendesignal auf getrennte Sendezweige aufgeteilt wird und die Sendesignale dieser Sendezweige mittels jeweiliger in unterschiedliche Richtungen polarisierender Antennen ausgesendet werden. Dementsprechend sind entsprechende getrennte Empfangszweige vorgesehen, wobei jedem Sendezweig ein Empfangszweig mit korrespondierender Polarisationsrichtung zugeordnet ist.

**Patentansprüche**

1. Verfahren zur Bestimmung von Informationen über Abstände und/oder Relativgeschwindigkeiten von Objekten mit Hilfe eines Dauerstrichradardetektors, bei dem

- ein ursprüngliches Sendesignal ($s(t)$) vervielfacht wird, um aus dem ursprünglichen Sendesignal mehrere Teilsendesignale ($s_1(t)$, $s_2(t)$, $s_3(t)$) zu erzeugen, welche sich bezüglich eines vorgegebenen Kriteriums voneinander unterscheiden,
- das vervielfachte, die Teilsendesignale ($s_1(t)$, $s_2(t)$, $s_3(t)$) umfassende Sendesignal ausgesendet wird,
- ein von einem Objekt reflektiertes Sendesignal als Empfangssignal ($r(t)$) empfangen wird, wobei das Empfangssignal mehrere Teilempfangssignale ($r_1(t)$, $r_2(t)$, $r_3(t)$) umfasst, welche jeweiligen Teilsendesignalen ($s_1(t)$, $s_2(t)$, $s_3(t)$) zugeordnet sind,
- jedes Teilsendesignal ($s_1(t)$, $s_2(t)$, $s_3(t)$) komplex mit dem Empfangssignal ($r(t)$) gemischt wird, so dass für jedes Teilsendesignal ein jeweiliges komplexes Teilspektrum mit einem Amplitudenspektrum und einem Phasenspektrum erzeugt wird,
- ein Vergleich der Phasenspektren für jeweilige mehrere unterschiedliche Frequenzwerte durchgeführt wird, wobei der Vergleich der Phasenspektren umfasst, dass für eine Mehrzahl von Frequenzwerten ein jeweiliges statistisches Merkmal, nämlich die Varianz oder die Standardabweichung, der aus den Phasenspektren abgetasteten Phasenwerte für den jeweiligen Frequenzwert bestimmt wird, und ein Vergleich der statistischen Merkmale durchgeführt wird, wobei der Vergleich der statistischen Merkmale das Ermitteln eines Minimums der statistischen Merkmale über unterschiedliche Frequenzwerte umfasst, und
- gegebenenfalls ein Detektionssignal erzeugt wird, wobei das Erzeugen des Detektionssignals umfasst, dass ein Phasendetektionssignal erzeugt wird, wenn der Vergleich der Phasenspektren ergibt, dass ein vorgegebenes Phasendetektionskriterium für die Detektion eines Objekts erfüllt ist, wobei das vorgegebene Phasendetektionskriterium bei einer bestimmten Frequenz das Vorliegen eines Minimums der statistischen Merkmale bei dieser Frequenz bedeutet.

2. Verfahren nach Anspruch 1,
   **dadurch gekennzeichnet,**
   **dass** das vervielfachte, die Teilsendesignale ($s_1(t)$, $s_2(t)$, $s_3(t)$) umfassende Sendesignal ($s(t)$) vor dem Aussenden auf eine Trägerfrequenz ($f_T$) aufwärts gemischt wird.

3. Verfahren nach Anspruch 2,
   **dadurch gekennzeichnet,**
   **dass** das Empfangssignal ($r(t)$) vor dem komplexen Mischen der Teilsendesignale ($s_1(t)$, $s_2(t)$, $s_3(t)$) mit dem Empfangssignal ($r(t)$ abwärts gemischt wird.

4. Verfahren nach einem der vorhergehenden Ansprüche,
   **dadurch gekennzeichnet,**
   **dass** sich die Teilsendesignale ($s_1(t)$, $s_2(t)$, $s_3(t)$) hinsichtlich ihrer Frequenz als vorgegebenes Kriterium voneinander unterscheiden, wobei vorzugsweise der Frequenzabstand ($f_L$) zwischen zwei benachbarten Teilsendesignalen für alle Teilsendesignale ($s_1(t)$, $s_2(t)$, $s_3(t)$) gleich ist, und dass die Teilsendesignale ($s_1(t)$, $s_2(t)$, $s_3(t)$) gleichzeitig ausgesendet werden.

5. Verfahren nach einem der vorhergehenden Ansprüche,
   **dadurch gekennzeichnet,**
   **dass** sich die Teilsendesignale hinsichtlich ihrer Polarisationsrichtung als vorgegebenes Kriterium voneinander unterscheiden.

6. Verfahren nach einem der vorhergehenden Ansprüche,
   **dadurch gekennzeichnet,**
   **dass** das Erzeugen des Detektionssignals umfasst, dass ferner ein Amplitudendetektionssignal auf der Grundlage zumindest eines Amplitudenspektrums erzeugt wird, wenn das zumindest eine Amplitudenspektrum ein vorgegebenes Amplitudendetektionskriterium für die Detektion eines Objekts erfüllt.

7. Verfahren nach Anspruch 6,
   **dadurch gekennzeichnet,**
   **dass** das Erzeugen des Amplitudendetektionssignals umfasst, dass die Amplitudenspektren der Teilspektren zu einem Gesamtamplitudenspektrum aufsummiert werden, und dass das Amplitudendetektionssignal auf der Grundlage des Gesamtamplitudenspektrums erzeugt wird, wobei das Gesamtamplitudenspektrum bevorzugt bandpassgefiltert wird.

8. Verfahren nach Anspruch 7,
   **dadurch gekennzeichnet,**
   **dass** das Erzeugen des Detektionssignals ferner umfasst, dass festgestellt wird, ob ein Amplitudendetektionssignal erzeugt worden ist, und das Detektionssignal nur dann erzeugt wird, wenn das festgestellte Amplitudendetektionssignal auf der Grundlage des Phasendetektionssignals als gültig verifiziert wurde.

9. Verfahren nach einem der Ansprüche 6 bis 8,
   **dadurch gekennzeichnet,**
   **dass** das Amplitudendetektionskriterium das Überschreiten und/oder Unterschreiten eines Schwellenwerts umfasst.

10. Verfahren nach einem der vorhergehenden Ansprüche,
    **dadurch gekennzeichnet,**
    **dass** das Phasendetektionskriterium ein Unterschreiten eines Schwellenwertes umfasst.

11. Verfahren nach einem der Ansprüche 9 oder 10,
    **dadurch gekennzeichnet,**

**dass** der jeweilige Schwellenwert für unterschiedliche Betriebsbedingungen des Dauerstrichradardetektors derart angepasst wird, dass eine Falschalarmrate für die Erzeugung des Detektionssignals konstant ist.

**12.** Verfahren nach einem der vorhergehenden Ansprüche,
**dadurch gekennzeichnet,**
**dass** das Sendesignal zumindest zwei Sinusschwingungen unterschiedlicher Frequenz aufweist, wobei jede dieser Sinusschwingungen zu mehreren jeweiligen Teilsendesignalen ($s_1(t)$, $s_2(t)$, $s_3(t)$) vervielfacht wird, oder dass die Frequenz des Sendesignals gemäß einer vorgegebenen, sich periodisch wiederholenden Rampe moduliert wird, wobei das derart modulierte Sendesignal zu den mehreren Teilsendesignalen vervielfacht wird.

**13.** Dauerstrichradardetektor mit einer Auswerteeinheit, welche zur Durchführung des Verfahrens nach einem der vorhergehenden Ansprüche ausgelegt ist.

**Claims**

**1.** A method of determining information on spacings and/or on relative speeds of objects with the aid of a continuous-wave radar detector, in which

- an original transmitted signal ($s(t)$) is used to generate a plurality of part transmitted signals ($s_1(t)$, $s_2(t)$, $s_3(t)$) from the original transmitted signal which differ from one another with respect to a predefined criterion;
- the used transmitted signal comprising the part transmitted signals ($s_1(t)$, $s_2(t)$, $s_3(t)$) is transmitted;
- a transmitted signal reflected by an object is received as a received signal ($r(t)$), with the received signal comprising a plurality of part received signals ($r_1(t)$, $r_2(t)$, $r_3(t)$) which are associated with respective part transmitted signals ($s_1(t)$, $s_2(t)$, $s_3(t)$);
- each part transmitted signal ($s_1(t)$, $s_2(t)$, $s_3(t)$) is mixed with the received signal ($r(t)$) in a complex manner such that a respective complex part spectrum having an amplitude spectrum and a phase spectrum is generated for each part transmitted signal;
- a comparison of the phase spectra for a respective plurality of different frequency values is carried out, with the comparison of the phase spectra comprising that, for a plurality of frequency values, a respective statistical feature, namely the variance or the standard deviation, of the phase values sampled from the phase spectra for the respective frequency value is determined and a comparison of the statistical features is carried out, with the comparison of the statistical features comprising the determination of a minimum of the statistical features over different frequency values; and
- if applicable, a detection signal is generated, with the generation of the detection signal comprising a phase detection signal being generated when the comparison of the phase spectra shows that a predefined phase detection criterion for the detection of an object is satisfied, with the predefined phase detection criterion at a specific frequency signifying the presence of a minimum of the statistical features at this frequency.

**2.** A method in accordance with claim 1,
**characterized in that**
the used transmitted signal ($s(t)$) comprising the part transmitted signals ($s_1(t)$, $s_2(t)$, $s_3(t)$) is mixed upwardly onto a carrier frequency ($f_T$) before the transmission.

**3.** A method in accordance with claim 2,
**characterized in that**
the received signal ($r(t)$) is mixed downwardly before the complex mixing of the part transmitted signals ($s_1(t)$, $s_2(t)$, $s_3(t)$) with the received signal ($r(t)$).

**4.** A method in accordance with any one of the preceding claims,
**characterized in that**
the part transmitted signals ($s_1(t)$, $s_2(t)$, $s_3(t)$) differ from one another with respect to their frequency as a predefined criterion, with the frequency interval ($f_L$) between two adjacent part transmitted signals preferably being the same for all the part transmitted signals ($s_1(t)$, $s_2(t)$, $s_3(t)$); and **in that** the part transmitted signals ($s_1(t)$, $s_2(t)$, $s_3(t)$) are transmitted simultaneously.

**5.** A method in accordance with any one of the preceding claims,
**characterized in that**

16

the part transmitted signals differ from one another with respect to their polarization direction as a predefined criterion.

6. A method in accordance with any one of the preceding claims,
   **characterized in that**
   the generation of the detection signal comprises an amplitude detection signal furthermore being generated on the basis of at least one amplitude spectrum when the at least one amplitude spectrum satisfies a predefined amplitude detection criterion for the detection of an object.

7. A method in accordance with claim 6,
   **characterized in that**
   the generation of the amplitude detection signal comprises the amplitude spectra of the part spectra being summed to form a total amplitude spectrum; and **in that** the amplitude detection signal is generated on the basis of the total amplitude spectrum, with the total amplitude spectrum preferably being band-pass filtered.

8. A method in accordance with claim 7,
   **characterized in that**
   the generation of the detection signal furthermore comprises a determination being made whether an amplitude detection signal has been generated and the detection signal only being generated when the determined amplitude detection signal has been verified as valid on the basis of the phase detection signal.

9. A method in accordance with any one of the claims 6 to 8,
   **characterized in that**
   the amplitude detection criterion comprises a threshold value being exceeded and/or fallen below.

10. A method in accordance with any one of the preceding claims,
    **characterized in that**
    the phase detection criterion comprises a threshold value being fallen below.

11. A method in accordance with one of the claims 9 or 10,
    **characterized in that**
    the respective threshold value is adapted for different operating conditions of the continuous-wave radar detector such that a false-alarm rate for the generation of the detection signal is constant.

12. A method in accordance with any one of the preceding claims,
    **characterized in that**
    the transmitted signal has at least two sinusoidal oscillations of different frequencies, with each of these sinusoidal oscillations being used to form a plurality of respective part transmitted signals ($s_1(t)$, $s_2(t)$, $s_3(t)$); or
    **in that** the frequency of the transmitted signal is modulated in accordance with a predefined, periodically repeating ramp, with the transmitted signal modulated in such a manner being used to form the plurality of part transmitted signals.

13. A continuous-wave radar detector comprising an evaluation unit which is configured to carry out the method in accordance with any one of the preceding claims.

**Revendications**

1. Procédé de détermination d'informations sur des distances et/ou des vitesses relatives d'objets au moyen d'un détecteur radar à ondes continues, dans lequel

   - un signal d'émission original ($s(t)$) est utilisé pour générer, à partir du signal d'émission original, plusieurs signaux d'émission partiels ($s_1(t)$, $s_2(t)$, $s_3(t)$) qui se distinguent entre eux à l'égard d'un critère donné,
   - le signal d'émission utilisé comprenant les signaux d'émission partiels ($s_1(t)$, $s_2(t)$, $s_3(t)$) est émis,
   - un signal d'émission réfléchi par un objet est reçu en tant que signal de réception ($r(t)$), le signal de réception comprenant plusieurs signaux de réception partiels ($r_1(t)$, $r_2(t)$, $r_3(t)$) qui sont associés à des signaux d'émission partiels respectifs ($s_1(t)$, $s_2(t)$, $s_3(t)$),
   - chaque signal d'émission partiel ($s_1(t)$, $s_2(t)$, $s_3(t)$) est mélangé de façon complexe avec le signal de réception ($r(t)$), de sorte que pour chaque signal d'émission partiel un spectre partiel complexe respectif avec un spectre d'amplitude et un spectre de phase est généré,

- une comparaison des spectres de phase est réalisée pour plusieurs valeurs de fréquence différentes respectives, la comparaison des spectres de phase consistant à déterminer pour une pluralité de valeurs de fréquence une caractéristique statistique respective, à savoir la variance ou l'écart-type, des valeurs de phase échantillonnées à partir des spectres de phase pour la valeur de fréquence respective, et une comparaison des caractéristiques statistiques est réalisée, la comparaison des caractéristiques statistiques consistant à déterminer un minimum des caractéristiques statistiques sur différentes valeurs de fréquence, et

- le cas échéant un signal de détection est généré, la génération du signal de détection consistant à générer un signal de détection de phase lorsque la comparaison des spectres de phase montre qu'un critère donné de détection de phase pour la détection d'un objet est satisfait, le critère donné de détection de phase signifiant, à une fréquence déterminée, la présence d'un minimum des caractéristiques statistiques à cette fréquence.

2. Procédé selon la revendication 1,
   **caractérisé en ce que**
   le signal d'émission (s(t)) utilisé comprenant les signaux d'émission partiels ($s_1(t)$, $s_2(t)$, $s_3(t)$) est converti vers le haut à une fréquence porteuse ($f_T$), avant l'émission.

3. Procédé selon la revendication 2,
   **caractérisé en ce que**
   le signal de réception (r(t)) est converti vers le bas, avant le mélange complexe des signaux d'émission partiels ($s_1(t)$, $s_2(t)$, $s_3(t)$), avec le signal de réception (r(t)).

4. Procédé selon l'une des revendications précédentes,
   **caractérisé en ce que**
   les signaux d'émission partiels ($s_1(t)$, $s_2(t)$, $s_3(t)$) se distinguent entre eux à l'égard de leur fréquence en tant que critère donné, et de préférence l'écart de fréquence ($f_L$) entre deux signaux d'émission partiels ($s_1(t)$, $s_2(t)$, $s_3(t)$) voisins est identique pour tous les signaux d'émission partiels ($s_1(t)$, $s_2(t)$, $s_3(t)$), et **en ce que**
   les signaux d'émission partiels ($s_1(t)$, $s_2(t)$, $s_3(t)$) sont émis simultanément.

5. Procédé selon l'une des revendications précédentes,
   **caractérisé en ce que**
   les signaux d'émission partiels se distinguent entre eux à l'égard de leur direction de polarisation en tant que critère donné.

6. Procédé selon l'une des revendications précédentes,
   **caractérisé en ce que**
   la génération d'un signal de détection consiste à générer en outre un signal de détection d'amplitude en se basant sur au moins un spectre d'amplitude lorsque ledit au moins un spectre d'amplitude satisfait un critère de détection d'amplitude donné pour la détection d'un objet.

7. Procédé selon la revendication 6,
   **caractérisé en ce que**
   la génération du signal de détection d'amplitude consiste à sommer les spectres d'amplitude des spectres partiels pour donner un spectre d'amplitude total, et **en ce que**
   le signal de détection d'amplitude est généré en se basant sur le spectre d'amplitude total, le spectre d'amplitude total étant de préférence filtré en passe-bande.

8. Procédé selon la revendication 7,
   **caractérisé en ce que**
   la génération du signal de détection consiste en outre à constater si un signal de détection d'amplitude a été généré, et le signal de détection n'est généré que lorsque le signal de détection d'amplitude constaté a été vérifié comme étant valide en se basant sur le signal de détection de phase.

9. Procédé selon l'une des revendications 6 à 8,
   **caractérisé en ce que**
   le critère de détection d'amplitude inclut de passer au-dessus et/ou au-dessous d'une valeur seuil.

10. Procédé selon l'une des revendications précédentes,

**caractérisé en ce que**
le critère de détection de phase inclut de passer au-dessous d'une valeur seuil.

11. Procédé selon l'une des revendications 9 ou 10,
    **caractérisé en ce que**
    la valeur seuil respective est adaptée pour différentes conditions de fonctionnement du détecteur radar à ondes continues, de telle sorte qu'un taux de fausse alerte pour la génération du signal de détection est constant.

12. Procédé selon l'une des revendications précédentes,
    **caractérisé en ce que**
    le signal d'émission présente au moins deux oscillations sinusoïdales de différentes fréquences, chacune de ces oscillations sinusoïdales étant utilisée pour donner plusieurs signaux d'émission partiels ($s_1(t)$, $s_2(t)$, $s_3(t)$), ou **en ce que**
    la fréquence du signal d'émission est modulée selon une rampe donnée répétitive périodiquement, le signal d'émission ainsi modulé étant utilisé pour donner plusieurs signaux d'émission partiels.

13. Détecteur radar à ondes continues comportant une unité d'évaluation qui est conçue pour mettre en oeuvre le procédé selon l'une des revendications précédentes.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

25

## Fig. 16

Fig. 17

Fig. 18

Fig. 19

Fig. 20

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10349919 A1
- US 20120133544 A1
- US 20120309324 A1
- EP 2031417 A1
- US 7773029 B1